Europäisches Patentamt

European Patent Office

Office européen des brevets

(19)

(11) Numéro de publication: **0 012 090**
**B1**

(12) FASCICULE DE BREVET EUROPEEN

(45) Date de publication du fascicule de brevet:
06.01.82

(21) Numéro de dépôt: 79400947.2

(22) Date de dépôt: 03.12.79

(51) Int. Cl.³: **F 16 C 7/02, B 32 B 31/14 //**
**B64C13/30**

(54) Procédé pour l'agencement d'un organe de liaison à une extrémité d'une bielle de commande, dispositif pour la mise en oeuvre du procédé, et bielle comportant un tel agencement.

(30) Priorité: 04.12.78 FR 7834111

(43) Date de publication de la demande:
11.06.80 Bulletin 80/12

(45) Mention de la délivrance du brevet:
06.01.82 Bulletin 82/1

(84) Etats contractants désignés:
BE CH DE GB IT NL SE

(56) Documents cités:
**FR-A-2 008 277**
**FR-A-2 152 289**
**FR-A-2 284 819**
**FR-A-2 343 918**
**FR-A-2 371 598**
**FR-A-2 385 935**
**US-A-3 082 515**
**US-A-3 553-978**

(73) Titulaire: **Societe Nationale Industrielle Aerospatiale**
**Société anonyme dite:, 37 Bld de Montmorency,**
**F-75016 Paris (FR)**

(72) Inventeur: **Mialon, Jacques, Résidence "Les Hermes",**
**F-13127 Vitrolles (FR)**
Inventeur: **Lamarche, Bernard, 6 avenue Emile Ripert,**
**F-13880 Velaux (FR)**

(74) Mandataire: **Bonnetat, Christian, Cabinet PROPI**
**Conseils 23 rue de Léningrad, F-75008 Paris (FR)**

BUNDESDRUCKEREI BERLIN

## Procédé pour l'agencement d'un organe de liaison à une extrémité d'une bielle de commande, dispositif pour la mise en oeuvre du procédé et bielle comportant un tel agencement

La présente invention concerne un procédé pour l'agencement d'un organe de liaison à une extrémité d'une bielle de commande, un dispositif pour la mise en oeuvre du procédé, ainsi qu'une bielle comportant au moins un tel agencement. Elle s'applique tout particulièrement, quoique non exclusivement, à la réalisation d'une bielle de transmission de commande pour aéronef, et notamment pour aérodyne.

L'invention concerne plus directement la fabrication de bielles légères et de faible prix de revient, destinées à être insérées dans des chaînes de commande de vol pour avions ou hélicoptères légers, dans lesquels les forces transmises sont relativement faibles, mais où, en revanche, une grande fiabilité est exigée.

On sait en effet que, pour la transmission de mouvements ou d'ordres, il est souvent nécessaire d'utiliser des tringleries pourvues de bielles. Ces bielles comportent généralement une tige tubulaire à au moins l'une des extrémités de laquelle est prévu un organe de liaison, tel qu'une chape, un oeilleton, une articulation à rotule, une fourche, etc.

Dans les bielles connues, ledit organe de liaison est soit solidaire d'un embout qui est rapporté à ladite tige tubulaire, ledit organe de liaison étant donc solidarisé de la tige par ledit embout, soit fixé directement sur l'extrémité de la tige, qui est préparée et usinée spécialement à cet effet.

La présente invention se rapporte à ce dernier type de bielles, qui perment d'obtenir des bielles plus légères et de moindre coût.

Généralement, dans les bielles dans lesquelles l'organe de liaison est directement fixé sur l'extrémité de la tige tubulaire, cette tige est en une matière déformable, par exemple un alliage d'aluminium, et son extrémité devant recevoir l'organe de liaison est aplatie sur une pièce intermédiaire métallique, rigide ou déformable, par exemple en un alliage de fer, destinée à renforcer ladite extrémité et à permettre un agencement résistant dudit organe de liaison.

Du fait de la différence des métaux constituant la tige tubulaire et ladite pièce intermédiaire, il apparaît un couple galvanique important entre les métaux, ce qui occasionne une corrosion importante, malgré l'interposition habituelle d'un mastic ou d'un vernis isolant avant aplatissement de l'extrémitée de la tige tubulaire.

De plus, la nature métallique de ladite pièce intermédiaire donne du poids à la bielle. Enfin, les extrémités de bielles ainsi réalisées présentent une étanchéité imparfait, ce qui permet à l'humidité de s'introduire à l'intérieur desdites bielles et de favoriser leur corrosion interne, préjudiciable à leur résistance et à la durée en service.

La présente invention a pour objet de remédier à ces inconvénients.

A cette fin, selon l'invention, le procédé pour l'agencement d'un organe de liaison à une extrémité d'une bielle de commande constituée par une tige dont au moins ladite extrémité est tubulaire et en une matière déformable, procédé selon lequel ladite extrémité tubulaire déformable est aplatie sur une pièce intermédiaire destinée à renforcer ladite extrémité et à permettre un agencement résistant dudit organe de liaison, est remarquable en ce que ladite pièce intermédiaire est constituée par un fourreau de fibres résistantes imprégné de résine polymérisable et aplliqué sensiblement contre la paroi intérieure de ladite extrémité, en ce que l'on procède à l'aplatissement de ladite extrémité au moins jusqu'à ce que les portions de face intérieure dudit fourreau, disposées de part et d'autre du plan d'aplatissement, soient appliquées l'une contre l'autre en obturant de façon sensiblement totale la section de la portion aplatie de ladite extrémité tubulaire et en ce que, après ledit aplatissement, on procède à la polymérisation de la résine imprégnant ledit fourreau.

Avantageusement, la longueur dur fourreau de fibres résistantes imprégné de résine polymérisable est choisie plus grande que la longueuer de la portion d'extrémité tubulaire destinée à être aplatie, pour se prolonger vers l'intérieur de la bielle sur une longueur au moins égale à la portion de tige à section évolutive qui, après l'aplatissement, relie la partie de bielle aplatie au reste de la bielle et ce prolongement dudit fourreau est empli d'un bouchon d'une matière plastique déformable sous effort modéré. Ainsi, au moment de l'aplatissement, cette matière déformable évite l'apparation de plis dans ladite portion de fourreau à section évolutive. De plus, il est avantageux que ledit bouchon soit en une matière du genre mousse à cellules fermées, par exemple une mousse de polyméthacrylimide. Ainsi, au moment de la polymérisation à chaud de la résine, les cellules du bouchon remplies d'air se dilatent, de sorte que le bouchon dilaté d'une part, plaque la portion de fourreau correspondante contre la paroi interne de l'extrémité tubulaire et, d'autre part, isole l'intérieur de la bielle de la partie aplatie, ce qui empêche l'air dilaté contenu dans la bielle de chasser vers l'extérieur la résine en cours de polymérisation, ce qui entraînerait des porosités dans ledit fourreau aplati et donc un manque d'étanchéité.

De plus, l'air contenu dans la tige tubulaire se dilate et exerce une pression sur ledit bouchon, ce qui concourt à appliquer le fourreau contre la paroi interne de l'extrémité de la bielle.

De préférence, pour réaliser ledit fourreau, on enroule lesdites fibres imprégnées de résine polymérisable sur une vessie gonflable et sur ledit bouchon mis en prolongement de celle-ci, après quoi on emmanche ladite extrémité tubulaire sur l'enroulement des fibres et la vessie est gonflée pour plaquer la portion de fourreau correspondante contre la paroi intérieure de l'extrémité tubulaire de la bielle.

Dans ces conditions, grâce à la vessie gonflable et au bouchon, on obtient une bonne adhérisation du fourreau contre la paroi intérieure de l'extrémité tubulaire.

Pour tenir compte du fait que, dans la partie de la tige à section évolutive, le bouchon ne peut pas être comprimé complètement, on dispose une matière intumescente à la chaleur entre ledit bouchon et la partie de fourreau destinée à être aplatie.

Pour la mise en oeuvre du procédé selon l'invention, on prévoit un dispositif qui comporte un mandrin sur lequel est disposée une vessie gonflable de section en forme de couronne, ledit mandrin comprenant des moyens pour fixer ledit bouchon en prolongement de ladite vessie.

Ainsi, l'invention concerne également une bielle dont l'agencement d'un organe de liaison à au moins l'une de ses extrémités est obtenue par la mise en oeuvre du procédé.

Les figures du dessin annexé feront bien comprendre comment l'invention peut être réalisée.

La figure 1 illustre, schématiquement et en coupe, la mise en oeuvre du procédé selon l'invention.

La figure 2 représente en coupe l'extrémité de la bielle réalisée selon la figure 1, avant polymérisation de la résine.

La figure 3 est une vue de dessus, à une échelle différente, de l'extrémité de bielle conforme à l'invention pourvu de son organe de liaison.

La figure 4 est une coupe suivant la ligne IV-IV de la figure 3.

La figure 5 est une soupe suivant la ligne V-V de la figure 3, l'organe de liaison étant supposé non encore monté.

Sur ces figures, des références identique désignent des éléments analogues.

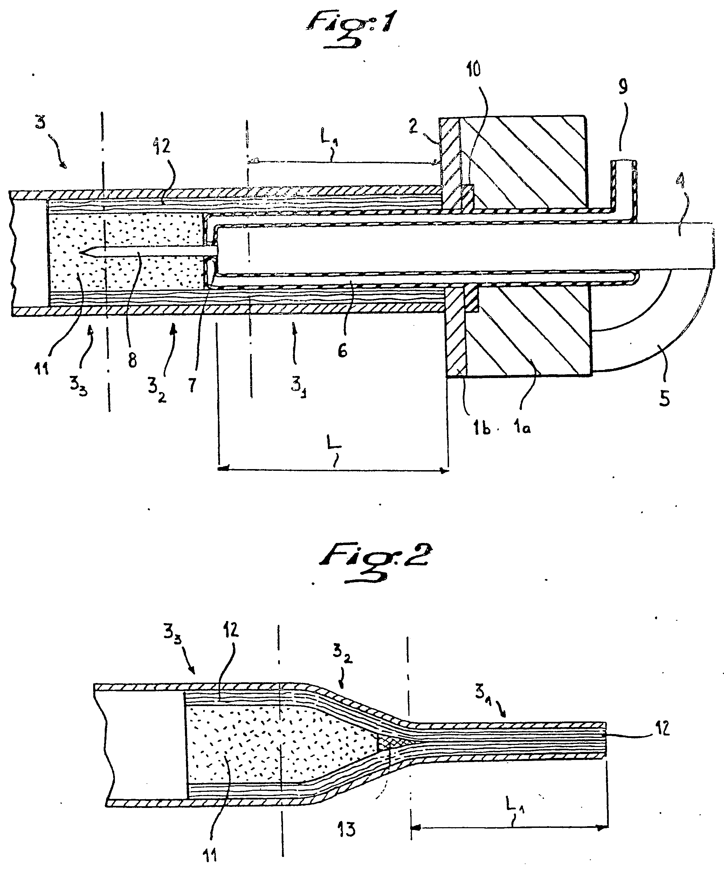

Le procédé conforme à l'invention et illustré sur la figure 1, fait intervenir un outillage comportant une pièce en deux parties 1a, 1b, dont une face plane 2 peut servir de butée pour l'extrémité 3 d'une tige tubulaire métallique destinée à former le corps d'une bielle de commande. Cet outillage comporte de plus un mandrin cylindrique 4, rendu solidaire de la pièce 1a, 1b par l'intermédiaire d'une pièce 5 et orthogonal à ladite face 2. Sur le mandrin 2 est disposée une vessie gonflable 6, de forme coronaire et cylindrique, entourant ledit mandrin. La vessie 6 comporte à une extrémité un passage 7 pour une aiguille 8, prolongeant le mandrin 4 vers l'intérieur de l'extrémité tubulaire 3 et disposé dans l'axe dudit mandrin. A son autre extrémité, la vessie 6 comporte une entrée 9 d'air sous pression, tandis qu'au niveau de la jonction entre les parties 1a et 1b, elle présente un épaulement 10 pressé entre celles-ci et destiné à solidariser ladite vessie 6 de l'outillage 1a, 1b, 4, 5, 8. Les pièces 1a, 1b, 4 et 5 peuvent être réalisées en alliage léger, tandis que l'aiguille 8 peut être en acier inoxydable.

A l'état dégonflé de la vessie 6, l'extrémité 3 peut être emmanchée avec jeu sur ladite vessie.

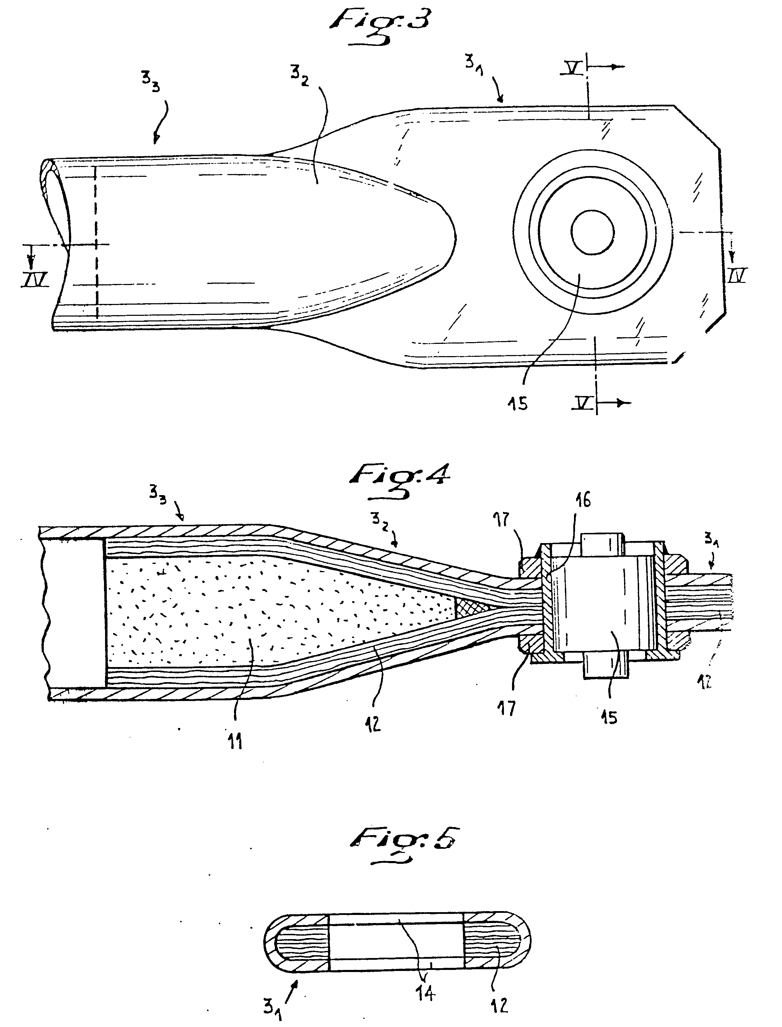

La longueur L du mandrin 4, en saillie par rapport à la face 2, est légèrement supérieure à la longueur $L_1$ de la partie $3_1$ de l'extrémité tubulaire 3 destinée à être aplatie (voir également la figure 2), tandis que l'aiguille 8 se trouve disposée à cheval sur les parties $3_2$ et $3_3$ de l'extrémité tubulaire 3, la partie $3_3$ n'étant pas affectée par l'aplatissement ultérieur de la partie $3_1$, tandis que la partie $3_2$, à section évolutive après cet aplatissement, relie la partie aplatie $3_1$ à la partie inchangée $3_3$.

Sur l'aiguille 8, est enfilé à force un bouchon cylindrique 11, disposé coaxialement en prolongement de la portion de vessie 6 voisine de ladite aiguille. De plus, le diamètre du bouchon 11 est sensiblement égal à celui de la vessie 6 à l'état dégonflé. La longueur du bouchon 11 est telle que celui-ci s'étend sur les portions $3_2$ et $3_3$ de l'extrémité tubulaire 3. Le bouchon 11 est en une matière plastique du genre mousse à cellules fermées, par exemple celle connue commercialement sous le nom de ROHACELL 71. Ce bouchon peut être obtenu par poinçonnage dans un bloc d'épaisseur appropriée. Sur la partie de la vessie 6 émergeant de la face 2 et sur le bouchon 11 prolongeant ladite partie de vessie, on enroule un fourreau 12 de tissu de fibres préimprégné de résine polymérisable. Le nombre de tours de tissu est déterminé par l'épaisseur souhaitée pour ledit fourreau, par exemple deux à trois fois l'épaisseur de la tige tubulaire metallique 3. Ce tissu peut être par exemple, un tissu de verre, de »kevlar« (Marque déposée) ou de carbone, imprégné de résine époxy.

Sur le fourreau 12 ainsi enroulé, on emmanche l'extrémité tubulaire 3 d'une tige métallique préalablement préparé et décapée (par exemple par décapage sulfochromique).

On introduit alors par l'entrée 9 de l'air sous pression dans la vessie 6 de manière à appliquer ledit tissu enroulé 12 contre la paroi intérieure de l'extrémité tubulaire 3 et chasser l'air, et ce pendant un temps déterminé, par exemple 30 secondes sous une pression de 2 da N/cm$^2$.

La vessie 6 est ensuite dégonflée et l'on sépare l'ensemble 3-11-12 de l'ensemble 1-4-6-8. On introduit alors, au fond de la cavité formée par le fourreau 12 plaqué contre l'extrémité tubulaire 3 et obturée par le bouchon 11, un morceau de film 13 intumescent à la chaleur.

L'extrémité tubulaire 3 est alors aplatie et conformée à la presse, à l'aide d'une matrice, et acquiert par exemple la forme que l'on peut voir sur la figure 3. A ce moment, les portions de face intérieure du fourreau 12 se trouvant dans la partie aplatie $3_1$ de l'extrémité 3 et qui sont disposées de part et d'autre du plan d'aplatissement, sont appliquées l'une contre l'autre et le fourreau aplati obture pratiquement complète-

ment ladite partie 3₁.

La bielle, dont les deux extrémités peuvent être traitées de façon semblable, est introduite dans une étuve pendant, par exemple, une heure et demie, tandis que l'intérieur de ladite étuve est proté à 120°C. Sous l'effet de la chaleur, les cellules d'air dudit bouchon 11 se dilatent, et il en est de même du film intumescent 13. Le fourreau 12 de tissu préimprégné se trouvant dans les protions 3₂ et 3₃ est donc appliqué contre la paroi intérieure de l'extrémité 3, tandis que la résine imprégnant ledit tissu se polymérise. On obtient ainsi une excellente adhérisation du tissu du fourreau 12 sur la paroi intérieure de l'extrémité tubulaire 3. De plus, le bouchon 11 empêche l'air contenu dans la bielle de créer des surpressions dans ladite extrémité 3 pendant la polymérisation de la resine, ce qui aurait pour résultat de chasser ladite résine vers l'extérieur, créant ainsi des porosités dans le stratifié formé par l'enroulement dudit tissu. Par contre, cet air exerce une pression sur les bouchons, concourrant ainsi à l'application du fourreau 12 contre les portions 3₃ et 3₂.

Le film intumescent 13 permet de créer une pression dans la cavité restant entre le bouchon 11 et la partie aplatie 3₁. Cette cavité est rendue nécessaire par le fait que l'extrémité du bouchon 11 ne peut être comprimée jusqu'à un diamètre sensiblement nul en conservant une forme sensiblement circulaire.

Après étuvage, la bielle selon l'invention est refroidie pendant un temps déterminé, par exemple de 15 à 30 minutes, jusqu'à ce que sa température soit inférieure à 40°C.

Un oeil 14 est alors percé et alésé dans la portion aplatie 3₁ et celle-ci est alors détourée selon une forme telle qu'on peut le voir sur la figure 3.

De façon connue, une rotule 15 ou le moyeu d'un axe sont ensuite sertis dans l'oeil 14 par l'intermédiaire d'une bague en métal 16 et de deux rondelles 17 comme on peut le voir sur la figure 4.

On voit sur la figure 5, une coupe de la partie aplatie 3₁. On peut constater sur cette vue, que la partie travaillante de l'embout selon l'invention peut avoir une section importante. Car du fait de son faible poids et de son formage par polymérisation, la partie en stratifié tissu-résine peut avoir une épaisseur beaucoup plus grande que celle d'une pièce métallique dont le poids et les possibilités de formage par aplatissement limitent l'épaisseur. On obtient ainsi une section de surface travaillante de deux à quatre fois plus grande que la section correspondante des bielles connues mentionnées dans le préambule, et par suite une meilleure résistance statique axiale de la bielle obtenue.

De plus, du fait de la structure stratifiée du manchon, les bielles selon l'invention présentent une excellente résistance à la fatigue. Enfin, leurs extrémités sont parfaitement étanches.

Le programme de fabrication de bielles à corps tubulaire et à deux extrémités semblables selon le procédé objet de l'invention peut se traiter ainsi:

- mise à longueur du corps tubulaire (tube en alliage d'aluminium par exemple)
- décapage sulfochromique dudit corps
- exécution et mise en place des bouchons de mousse sur les aiguilles 8
- enroulement des fourreaux en stratifié tissu-résine
- emmanchement des extrémités du corps tubulaire sur des mandrins 4 à vessie 6
- mise sous pression d'air des vessies
- dégonflage des vessies et démontage du corps tubulaire desdits mandrins
- écrasement des extrémités du corps tubulaire
- polymérisation en étuve de la résine des fourreaux
- perçage, alésage, détourage des extrémités aplaties
- sertissage de l'équipement des extrémités aplaties.

Il est bien entendu possible d'intervertir deux ou plusieurs phases du processus décrit ci-dessus sans sortir du cadre de l'invention.

La mise à longueur desdits tubes métalliques est déterminée par la longueur entre axes désirés de la bielle, compte-tenu de la variation de longueur provoquée par l'écrasement des extrémités.

**Revendications**

1. Procédé pour l'agencement d'un organe de liaison (15) à une extrémité d'une bielle de commande constituée par une tige (3) dont au moins ladite extrémité est tubulaire et en une matière déformable, procédé selon lequel ladite extrémité tubulaire déformable est aplatie sur une pièce intermédiaire destinée à renforcer ladite extrémité et à permettre un agencement résistant dudit organe de liaison (15), caractérisé en ce que ladite pièce intermédiaire est constituée par un fourreau (12) de fibres résistantes imprégné de résine polymérisable et appliqué sensiblement contre la paroi intérieure de ladite extrémité, en ce que l'on procédé à l'aplatissement de ladite extrémité au moins jusqu'à ce que les portions de face intérieure dudit fourreau, disposées de part et d'autre du plan d'aplatissement, soient appliquées l'une contre l'autre en obturant de façon sensiblement totale la section de la portion aplatie (3₁) de ladite extrémité tubulaire et en ce que, après ledit aplatissement, on procédé à la polymérisation de la résine imprégnant ledit fourreau (12).

2. Procédé selon la revendication 1, caractérisé en ce que la longueur du fourreau (12) de fibres résistantes imprégné de résine polymérisable est choisie plus grande que la longueur de la portion d'extrémité tubulaire destinée à être aplatie, pour se prolonger vers l'intérieur de la bielle sur une longueur au moins égale à la portion de tige (3₂) à section évolutive qui, après aplatissement, relie la portion de bielle aplatie (3₁) au reste (3₃) de la bielle à section inchangée, ce prolongement dudit fourreau étant empli d'un bouchon (11) d'une matière plastique déformable, du genre mousse à cellules fermées.

3. Procédé selon la revendication 2, caractérisé en ce que le bouchon (11) est en une mousse de polyméthacrylimide.

4. Procédé selon l'une quelconque des revendications 2 ou 3, caractérisé en ce que, pour réaliser ledit fourreau (12), on enroule lesdites fibres imprégnées de résine polymérisable sur une vessie gonflable (6) et sur ledit bouchon (11) mis en prolongement de celle-ci, après quoi on emmanche ladite extrémité tubulaire (3) sur l'enroulement des fibres et la vessie (6) est gonflée pour plaquer la portion de fourreau correspondante contre la paroi intérieure de l'extrémité tubulaire de la bielle.

5. Procédé selon l'une quelconque des revendications 2 à 4, caractérisé en ce que l'on dispose une matière intumescente (13) à la chaleur entre ledit bouchon (11) et la partie de fourreau (3₁) destinée à être aplatie.

6. Dispositif pour la mise en oeuvre du procédé spécifié sous l'une quelconque des revendications 2 à 5, caractérisé en ce qu'il comporte un mandrin (4) sur lequel est disposée une vessie gonflable (6) de section en forme de couronne, ledit mandrin comprenant des moyens (8) pour fixer ledit bouchon (11) en prolongement de ladite vessie (6).

7. Bielle dont l'agencement d'un organe de liaison à au moins l'une de ses extrémités est obtenu par la mise en oeuvre du procédé spécifié sous l'une quelconque des revendications 1 à 5.

## Patentansprüche

1. Verfahren zum Anordnen eines Verbindungsorgans (15) an einem Ende einer Betätigungsstange bestehend aus einem mindestens am Ende röhrenförmig ausgebildeten und aus verformbarem Werkstoff gefertigten Stab, wobei nach diesem Verfahren das verformbare Röhrenende auf einem zur Verstärkung des Endes bestimmten Zwischenstück und zur widerstandsfähigen Anordnung des Verbindungsorgans (15) abgeflacht wird, dadurch gekennzeichnet, daß das Zwischenstück aus einer aus mit polymerisierbarem Harz imprägnierten wiederstandsfähigen Fasern gefertigten Muffe oder Büchse (12) besteht, die weitgehend gegen die Innenwand des Endes angedrückt wird, daß das Ende zumindest soweit abgeflacht wird, bis die beidseitig der Abflachungsebene liegenden Abschnitte der Innenfläche der Muffe gegeneinander gedrückt werden, so daß der Querschnitt des abgeflachten Abschnitts (3₁) des Röhrenendes im wesentlichen vollständig verschlossen wird, und daß das die Muffe (12) imprägnierende Harz nach dem Abflachen polymerisiert wird.

2. Verfahren nach Anspruch 1, dadurch gekennzeichnet, daß die Länge der Muffe (12) der mit polymerisierbarem Harz imprägnierten widerstandsfähigen Fasern größer gewählt wird als die Länge des zum Abflachen bestimmten Röhrenendabschnitts, so daß sie sich über einer Länge in die Betätigungsstange hinein erstreckt, die zumindest gleich ist dem Abschnitt des Stabes (3₂) von entwickeltem Querschnitt der nach dem Abflachen den Abschnitt der abgeflachten Betätigungsstange (3₁) mit dem Rest (3₃) der Betätigungsstange unveränderten Querschnitts verbindet, wobei diese Verlängerung der Muffe mit einem Stopfen (11) aus in der Art eines Schaumstoffes mit geschlossenen Zellen verformbaren Plastwerkstoff angefüllt wird.

3. Verfahren nach Anspruch 2, dadurch gekennzeichnet, daß der Stopfen (11) aus einem Polymethacrylimid-Schaum gefertigt ist.

4. Verfahren nach einem der Ansprüche 2 oder 3, dadurch gekennzeichnet, daß zur Fertigung der Muffe (12) die mit polymerisierbarem Harz imprägnierten Fasern auf einer aufblasbaren Blase (6) und auf dem diese weiterführenden Stopfen gewunden werden, wonach das Röhrenende (3) auf die Wicklung der Fasern gesteckt und die Blase (6) aufgeblasen wird, um den entsprechenden Abschnitt der Muffe gegen die Innenwand des Röhrenendes der Stange anzudrücken.

5. Verfahren nach einem der Ansprüche 2 bis 4, dadurch gekennzeichnet, daß zwischen den Stopfen (11) und den abzuflachenden Teil der Muffe (3₁) ein im erwärmten Zustand schäumendes Material (13) gegeben wird.

6. Vorrichtung zur Durchführung des in den Ansprüchen 2 bis 5 beanspruchten Verfahrens, dadurch gekennzeichnet, daß sie einen Dorn (4) aufweist, auf dem eine aufblasbare Blase mit kranzförmigem Querschnitt angeordnet ist, wobei dieser Dorn eine Einrichtung (8) zum Befestigen des Stopfens (11) in Weiterführung der Blase (6) besitzt.

7. Betätigungsstange, bei der das Anordnen eines Verbindungsorgans an zumindest einem seiner Enden dadurch erreicht wird, daß das in den Ansprüchen 1 bis 5 beanspruchte Verfahren durchgeführt und angewendet wird.

## Claims

1. Process for fitting a connecting member (15) at one end of a control rod constituted by a rod (3) of which at least said end is tubular and made of a deformable material, according to which process said deformable tubular end is flattened on an intermediate piece intended to reinforce said end and to render said connecting member (15) resistant, characterised in that said intermediate piece is constitued by a sleeve (12) of resistant fibres impregnated with polymerisable resin and applied substantially against the inner wall of said end, in that said end is flattened at least until the portions of inner face of said sleeve, disposed on either side of the plane of flattening, are applied against one another, substantially completely obturating the section of the flattened portion (3) of said tubular end, and in that the resin impregnating said sleeve (12) is polymerised after said flattening.

2. Process according to Claim 1, characterized in that the length of the sleeve (12) of resistant fibres impregnated with polymerisable resin is chosen to be greater than the length of the tubular end portion intended to be flattened so that it extends inside the connecting rod over a length at least equal to the portion of rod $(3_2)$ of evolution section which, after flattening, connects the portion of flattened connecting rod $(3_1)$ to the rest $(3_3)$ of the connecting rod of unchanged section, this extension of said sleeve being filled with a plug (11) made of deformable plastics material, of the closed cell foam type.

3. Process according to Claim 2, characterized in that the plug (11) is made of a polymethacrylimide foam.

4. Process according to either one of Claims 2 or 3, characterized in that, to make said sleeve (12), said fibres impregnated with polymerisable resin are wound on an inflatable bag (6) and on said plug (11) in line therewith, after which said tubular end (3) is fitted on the winding of the fibres and the bag (6) is inflated to apply the corresponding portion of sleeve against the inner wall of the tubular end of the connecting rod.

5. Process according to any of Claims 2 to 4, characterized in that a material which is intumescent when heated (13) is disposed between said plug (11) and the part of the sleeve $(3_1)$ intended to be flattened.

6. Device for carrying out the process as claimed in any one of Claims 2 to 5, characterized in that it comprises a mandrel (4), on which is disposed an inflatable bag (6) of coronary section, said mandrel comprising means (8) for fixing said plug (11) in line with said bag (6).

7. Connecting rod in which the fitting of a connecting member at at least one of ist ends is obtained by carrying out the process as claimed in any one of Claims 1 to 5.

Fig.1

Fig.2

## Fig.3

## Fig.4

## Fig.5